(19) 

**Europäisches Patentamt**
**European Patent Office**
**Office européen des brevets**

(11) **EP 4 270 810 A1**

(12) **EUROPEAN PATENT APPLICATION**
published in accordance with Art. 153(4) EPC

(43) Date of publication:
**01.11.2023 Bulletin 2023/44**

(21) Application number: **21922626.3**

(22) Date of filing: **21.12.2021**

(51) International Patent Classification (IPC):
**H04B 7/06** (2006.01)   **H04L 5/00** (2006.01)

(52) Cooperative Patent Classification (CPC):
**H04B 7/06; H04L 5/00**

(86) International application number:
**PCT/CN2021/140163**

(87) International publication number:
**WO 2022/161036 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2021 CN 202110139652**

(71) Applicant: **Huawei Technologies Co., Ltd.
Shenzhen, Guangdong 518129 (CN)**

(72) Inventors:
• **DING, Rentian**
**Shenzhen, Guangdong 518129 (CN)**
• **YANG, Fei**
**Shenzhen, Guangdong 518129 (CN)**
• **ZHAO, Zhilin**
**Shenzhen, Guangdong 518129 (CN)**

(74) Representative: **Maiwald GmbH
Engineering
Elisenhof
Elisenstrasse 3
80335 München (DE)**

(54) **METHOD AND APPARATUS FOR SELECTING ANTENNA, ELECTRONIC DEVICE, AND READABLE STORAGE MEDIUM**

(57)   This application is applicable to the terminal field, and provides an antenna selection method and apparatus, an electronic device, and a readable storage medium. The method includes: sending an antenna switch channel sounding reference signal to a network device through each antenna; receiving an antenna selection message sent by the network device, where the antenna selection message indicates a first antenna in a plurality of antennas and a signal quality gain of each remaining antenna relative to the first antenna; obtaining a preset signal quality correction gain of the first antenna; and when the signal quality gain of each remaining antenna is greater than the signal quality correction gain of the first antenna, determining to use the first antenna to perform communication. Because the first antenna is an optimal antenna obtained by the network device through measurement, whether to use the optimal antenna obtained by the network device through measurement to perform communication is determined based on a signal quality correction gain of the optimal antenna and a signal quality gain of each remaining antenna relative to the optimal antenna, so that an antenna with good communication quality can be more accurately selected and used for communication.

FIG. 5A

**(Cont. next page)**

CONT.
FROM
FIG. 5A

CONT.
FROM
FIG. 5A

CONT.
FROM
FIG. 5A

S308

Send the identification information
of the first antenna and the gains of
remaining antennas relative to the
first antenna

S309

Obtain a signal
quality correction
gain of the first
antenna based on
the identification
information

S310

A
signal
quality gain
of each antenna is
greater than the
signal quality
correction
gain

Yes

S311

Switch to the
first antenna for
communication

No  S312

Determine a
second
antenna
through TAS

S313

Switch to the
second antenna
for
communication

FIG. 5B

## Description

This application claims priority to Chinese Patent Application No. 202110139652.3, filed with the China National Intellectual Property Administration on January 30, 2021 and entitled "ANTENNA SELECTION METHOD AND APPARATUS, ELECTRONIC DEVICE, AND READABLE STORAGE MEDIUM", which is incorporated herein by reference in its entirety.

## TECHNICAL FIELD

This application relates to the field of terminal technologies, and in particular, to an antenna selection method and apparatus, an electronic device, and a readable storage medium.

## BACKGROUND

When an electronic device like a smartphone or a tablet computer communicates with a base station by using a cellular network, an antenna in the electronic device needs to send or receive communication data. One electronic device includes a plurality of antennas.

Before communication, communication quality of each antenna needs to be measured. An antenna with best communication quality is determined as an optimal antenna, and then the optimal antenna is used to send or receive the communication data.

However, when the optimal antenna is determined based on only communication quality of an antenna, selection of the optimal antenna may be inaccurate. This leads to poor communication quality.

## SUMMARY

Embodiments of this application provide an antenna selection method and apparatus, an electronic device, and a readable storage medium, to resolve a problem of poor communication quality caused by inaccurate selection of an optimal antenna.

According to a first aspect, an embodiment of this application provides an antenna selection method, applied to an electronic device. The electronic device includes a plurality of antennas. The method includes: sending an antenna switch (antenna switch, AS) channel sounding reference signal (sounding reference signal, SRS) to a network device through each antenna; receiving an antenna selection message sent by the network device, where the antenna selection message indicates a first antenna in the plurality of antennas and a signal quality gain of each remaining antenna relative to the first antenna; obtaining a preset signal quality correction gain of the first antenna; and when the signal quality gain of each remaining antenna is greater than the signal quality correction gain of the first antenna, determining to use the first antenna to perform communication.

The electronic device in the first aspect may be a device like a mobile phone, a tablet computer, or a customized terminal that has an antenna and can perform communication through the antenna. A specific type of the electronic device is not limited in this embodiment of this application.

In the first aspect, the AS SRS is sent to the network device through each antenna, and the antenna selection message returned by the network device is received. Finally, whether to perform communication through the first antenna is determined based on the signal quality correction gain of the first antenna and the signal quality gain of each remaining antenna relative to the first antenna that are indicated by the antenna selection message. Because the first antenna is an optimal antenna obtained by the network device through measurement, whether to use the optimal antenna obtained by the network device through measurement to perform communication is determined based on a signal quality correction gain of the optimal antenna and a signal quality gain of each remaining antenna relative to the optimal antenna, so that an antenna with best communication quality can be more accurately selected and used for communication.

In some implementations, when a signal quality gain of any one of the antennas is less than the signal quality correction gain, a second antenna is determined based on downlink signal quality of each antenna. The second antenna is used to perform communication.

In some implementations, the antenna selection message includes one of a radio resource control (radio resource control, RRC) message, a downlink control information (downlink control information, DCI) message, or a physical layer control element (MAC control element, MAC CE) message.

According to a second aspect, an antenna selection method is applied to a network device. The method includes: receiving a plurality of AS SRSs from an electronic device; determining, based on uplink signal quality of the plurality of AS SRSs, a first antenna and a signal quality gain of each remaining antenna relative to the first antenna, where the first antenna is an antenna indicated by an antenna identifier corresponding to an AS SRS with best uplink signal quality; and sending an antenna selection message to the electronic device, where the antenna selection message indicates the first antenna in a plurality of antennas and the signal quality gain of each remaining antenna relative to the first antenna.

The network device in the second aspect may be a communication base station that can receive the AS SRS, for example, a 5G base station (gNB) or a 4G base station (eNB). A specific type of the network device is not limited in this embodiment of this application.

In some implementations, the determining, based on the uplink signal quality of the plurality of AS SRSs, a first antenna includes:

measuring a reference signal received power of each AS SRS, where when the reference signal received power indicates the uplink signal quality, a larger reference signal received power indicates better uplink signal quality; and

determining, as the first antenna, an antenna corresponding to an AS SRS with a largest reference signal received power.

In some implementations, determining the first antenna based on the uplink signal quality of the plurality of AS SRSs includes:

measuring a signal to interference plus noise ratio of each AS SRS, where when the signal to interference plus noise ratio indicates the uplink signal quality, a larger signal to interference plus noise ratio indicates better uplink signal quality; and

determining, as the first antenna, an antenna corresponding to an AS SRS with a largest signal to interference plus noise ratio.

In some implementations, the antenna selection message includes one of an RRC message, a DCI message, or a MAC CE message.

According to a third aspect, an embodiment of this application provides an antenna selection apparatus, applied to an electronic device. The electronic device includes a plurality of antennas. The apparatus includes: a sending module, configured to send an antenna switch channel sounding reference signal to a network device through each antenna; a receiving module, configured to receive an antenna selection message sent by the network device, where the antenna selection message indicates a first antenna in the plurality of antennas and a signal quality gain of each remaining antenna relative to the first antenna; an obtaining module, configured to obtain a preset signal quality correction gain of the first antenna; and a determining module, configured to: when the signal quality gain of each remaining antenna is greater than the signal quality correction gain of the first antenna, determine to use the first antenna to perform communication.

In some implementations, the determining module is further configured to: when a signal quality gain of any one of the antennas is less than the signal quality correction gain, determine a second antenna based on downlink signal quality of each antenna. The second antenna is used to perform communication.

In some implementations, the antenna selection message includes one of an RRC message, a DCI message, or a MAC CE message.

According to a fourth aspect, an embodiment of this application provides an antenna selection apparatus, applied to a network device. The apparatus includes:

a receiving module, configured to receive a plurality of antenna switch channel sounding reference signals from an electronic device; a determining module, configured to determine, based on uplink signal quality of the plurality of antenna switch channel sounding reference signals, a first antenna and a signal quality gain of each remaining antenna relative to the first antenna, where the first antenna is an antenna indicated by an antenna identifier corresponding to an antenna switch channel sounding reference signal with best uplink signal quality; and a sending module, configured to send an antenna selection message to the electronic device, where the antenna selection message indicates the first antenna in a plurality of antennas and the signal quality gain of each remaining antenna relative to the first antenna.

In some implementations, the determining module is specifically configured to measure a reference signal received power of each AS SRS. When the reference signal received power indicates the uplink signal quality, a larger reference signal received power indicates better uplink signal quality. An antenna corresponding to an AS SRS with a largest reference signal received power is determined as the first antenna.

In some implementations, the determining module is specifically configured to measure a signal to interference plus noise ratio of each AS SRS. When the signal to interference plus noise ratio indicates the uplink signal quality, a larger signal to interference plus noise ratio indicates better uplink signal quality. An antenna corresponding to an AS SRS with a largest signal to interference plus noise ratio is determined as the first antenna.

In some implementations, the antenna selection message includes one of an RRC message, a DCI message, or a MAC CE message.

According to a fifth aspect, an embodiment of this application provides an electronic device, including a plurality of antennas, a memory, a processor, and a computer program that is stored in the memory and that can run on the processor. When the processor executes the computer program, the method provided in the first aspect is implemented by using the plurality of antennas.

According to a sixth aspect, an embodiment of this application provides a network device, including a memory, a processor, and a computer program that is stored in the memory and that can be run on the processor. When the processor executes the computer program, the method provided in the second aspect is implemented by using a plurality of antennas.

According to a seventh aspect, an embodiment of this application provides a computer-readable storage medium. The computer-readable storage medium stores a computer program. When the computer program is executed by a processor, the method provided in the first aspect is implemented.

According to an eighth aspect, an embodiment of this application provides a computer-readable storage medium. The computer-readable storage medium stores a computer program. When the computer program is executed by a processor, the method provided in the second aspect is implemented.

According to a ninth aspect, an embodiment of this application provides a computer program product. When the computer program product runs on a terminal device, the terminal device is enabled to perform the method provided in the first aspect.

According to a tenth aspect, an embodiment of this application provides a computer program product. When the computer program product runs on a terminal device, the terminal device is enabled to perform the method provided in the second aspect.

According to an eleventh aspect, an embodiment of this application provides a chip system. The chip system includes a memory and a processor. The processor executes a computer program stored in the memory, to implement the method provided in the first aspect.

According to a twelfth aspect, an embodiment of this application provides a chip system. The chip system includes a memory and a processor. The processor executes a computer program stored in the memory, to implement the method provided in the second aspect.

According to a thirteenth aspect, an embodiment of this application provides a chip system. The chip system includes a processor. The processor is coupled to the computer-readable storage medium provided in the seventh aspect, and the processor executes the computer program stored in the computer-readable storage medium, to implement the method provided in the first aspect.

According to a fourteenth aspect, an embodiment of this application provides a chip system. The chip system includes a processor. The processor is coupled to the computer-readable storage medium provided in the eighth aspect, and the processor executes the computer program stored in the computer-readable storage medium, to implement the method provided in the second aspect.

It may be understood that, for beneficial effects of the second aspect to the fourteenth aspect, refer to the related description in the first aspect. Details are not described herein again.

## BRIEF DESCRIPTION OF DRAWINGS

FIG. 1 is a schematic diagram of an application scenario of an antenna selection method according to this application;
FIG. 2 is a schematic diagram of an application scenario of another antenna selection method according to this application;
FIG. 3 is a schematic diagram of a structure of an electronic device according to this application;
FIG. 4 is a schematic diagram of a system architecture of an electronic device according to this application;
FIG. 5A and FIG. 5B are a schematic flowchart of an antenna selection method according to this application;

FIG. 6A and FIG. 6B are a schematic flowchart of another antenna selection method according to this application;
FIG. 7A and FIG. 7B are a schematic flowchart of still another antenna selection method according to this application;
FIG. 8 is a schematic diagram of a structure of an antenna selection apparatus according to this application;
FIG. 9 is a schematic diagram of another structure of an antenna selection apparatus according to this application;
FIG. 10 is a schematic diagram of a structure of an electronic device according to this application; and
FIG. 11 is a schematic diagram of a structure of a network device according to this application.

## DESCRIPTION OF EMBODIMENTS

In the following description, to illustrate rather than limit, specific details such as a particular system structure and a technology are provided to make a thorough understanding of embodiments of this application. However, a person skilled in the art should know that this application may also be implemented in other embodiments without these specific details. In other cases, detailed descriptions of a well-known system, apparatus, circuit, and method are omitted, so that the description of this application is not affected by unnecessary details.

It should be understood that a term "and/or" used in the specification and the appended claims of this application refers to any combination and all possible combinations of one or more associated listed items, and includes these combinations.

As used in the specification and the appended claims of this application, according to the context, a term "if' may be interpreted as "when", "once", "in response to determine", or "in response to detect".

In addition, in the description of the specification and the appended claims of this application, terms "first", "second", "third", and the like are merely used for distinguishing descriptions, but cannot be understood as indicating or implying relative importance.

Reference to "an embodiment", "some embodiments", or the like described in this specification of this application means that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. Terms "include", "contain", "have", and variants thereof all mean "including, but not limited to", unless otherwise specifically emphasized in another manner.

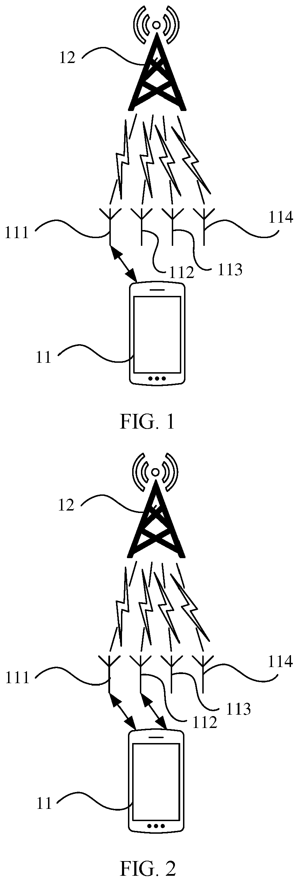

FIG. 1 is a schematic diagram of an application scenario of an antenna selection method according to this application. Refer to FIG. 1. The scenario includes an electronic device 11. The electronic device 11 includes a plurality of antennas, for example, may include an antenna one 111, an antenna two 112, an antenna three 113, and an antenna four 114. The scenario further includes a network device 12. The electronic device 11 keeps in a connected state with the network device 12 through the antennas. In other words, the electronic device 11 is user equipment (User Equipment, UE), and the network device 12 is a base station, for example, may be a gNB or an eNB.

Because there are a plurality of antennas on the UE, an optimal antenna needs to be selected to perform communication, and communication quality of the optimal antenna is best during communication. In the conventional technology, a plurality of sets of uplink non-codebook (non-codebook, Non-CB) SRS resources with a same quantity as the antennas of the UE are configured, and SRSs are sequentially sent to a base station on each antenna of the UE by using a corresponding Non-CB SRS resource. After receiving the SRS, the base station measures uplink communication quality of the antenna based on the Non-CB SRS resource corresponding to the antenna. In addition, the base station further configures a plurality of sets of AS SRS resources with a same quantity as the antennas of the UE, and measures downlink communication quality of the SRS by using the AS SRS resources. Finally, the base station determines an optimal antenna through calculation based on the uplink communication quality of each antenna and the downlink communication quality, and informs the UE to switch to the optimal antenna.

Alternatively, refer to FIG. 2. FIG. 2 is a schematic diagram of an application scenario of another antenna selection method according to this application. In FIG. 2, SRSs may be simultaneously sent to a base station through two antennas. Because a non-CB SRS resource and an AS SRS resource each support simultaneous sending of only one SRS, to simultaneously send two SRSs, both the non-CB SRS resource and the AS SRS resource need to be used for sending.

However, some UEs do not consider an electromagnetic wave absorption ratio (Specific Absorption Rate, SAR) when sending the SRS. After an optimal antenna is determined, when data of a physical uplink shared channel (Physical Uplink Shared Channel, PUSCH) is sent through the antenna, if an SAR of the antenna is greater than a specified limit value, an SAR reduction operation is performed on the antenna, and antenna communication quality after SAR reduction may not be communication quality of the optimal antenna. As a result, communication is not performed on an antenna with optimal communication quality.

In view of this, this application provides an antenna selection method applied to an electronic device.

The electronic device includes a plurality of antennas. The method includes: sending an AS SRS and identification information of the antenna to a network device on different time-frequency resources sequentially through each antenna; receiving an antenna selection message sent by the network device, where the antenna selection information includes an identifier message of a first antenna and a signal quality gain of each remaining antenna relative to the first antenna; obtaining a signal quality correction gain of the first antenna based on the identification information; and when the signal quality gain of each antenna is greater than the signal quality correction gain, performing communication through the first antenna.

This application further provides an antenna selection method applied to a network device. The method includes: receiving a plurality of AS SRSs from an electronic device and identification information of an antenna corresponding to each AS SRS; determining a first antenna based on uplink signal quality of the plurality of AS SRSs, where uplink signal quality of an AS SRS corresponding to the first antenna is best in the uplink signal quality of the plurality of received AS SRSs; obtaining a signal quality gain of each remaining antenna relative to the first antenna, where the signal quality gain is obtained through calculation by using an AS SRS corresponding to each remaining antenna and the AS SRS of the first antenna; and sending an antenna selection message to the electronic device, where the antenna selection information includes an identifier message of the first antenna and the signal quality gain of each remaining antenna relative to the first antenna.

In this application, the AS SRS is sent to the network device on different time-frequency resources sequentially through each antenna, and the identifier message of the first antenna and the signal quality gain of each remaining antenna relative to the first antenna that are returned by the network device are received. Finally, it is determined, based on the signal quality correction gain of the first antenna and the signal quality gain of each remaining antenna relative to the first antenna, whether to use the first antenna to perform communication. Because the first antenna is an optimal antenna obtained by the network device through measurement, whether to use the optimal antenna obtained by the network device through measurement to perform communication is determined based on a signal quality correction gain of the optimal antenna and a signal quality gain of each remaining antenna relative to the optimal antenna, so that an antenna with best communication quality can be more accurately selected and used for communication.

In addition, because the AS SRS is used to measure the uplink signal quality of the antenna, the non-CB SRS may not need to be configured, or only one non-CB SRS needs to be configured to simultaneously measure two antennas. This effectively reduces SRS resource occupation of a base station, and resolves a problem of insufficient SRS resources of the base station.

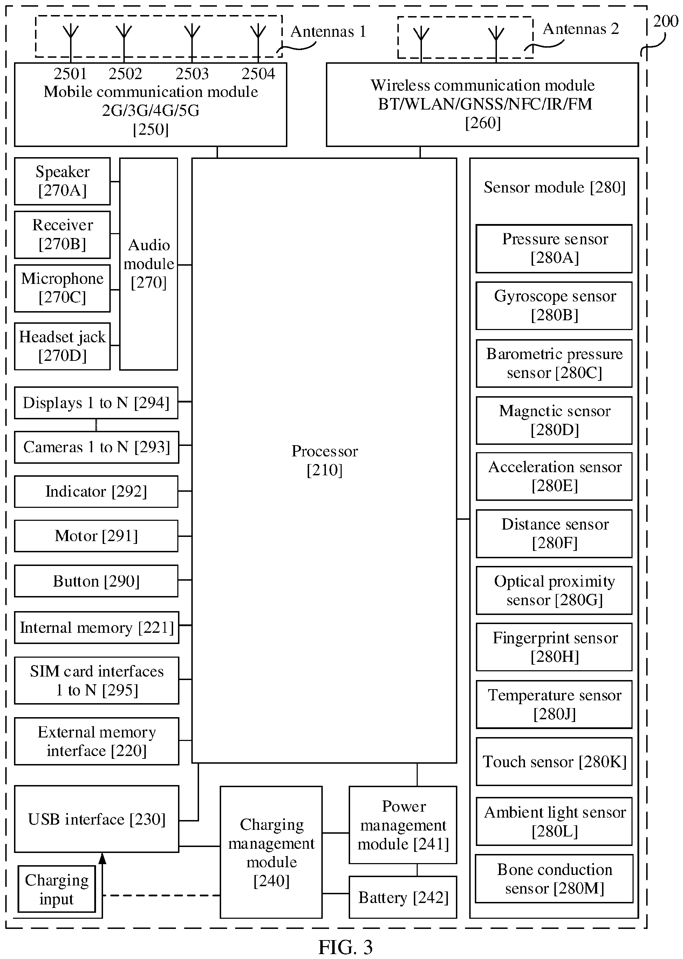

FIG. 3 is a schematic diagram of a structure of an electronic device. The electronic device 200 may include a processor 210, an external memory interface 220, an internal memory 221, a universal serial bus (universal serial bus, USB) interface 230, a charging management module 240, a power management module 241, a battery 242, antennas 1, antennas 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by using hardware, software, or a combination of software and hardware.

For example, when the electronic device 200 is a mobile phone or a tablet computer, the electronic device 200 may include all components in the figure, or may include only some components in the figure.

When the electronic device 200 is a large-screen device, the electronic device 200 may include the processor 210, the external memory interface 220, the internal memory 221, the universal serial bus (universal serial bus, USB) interface 230, the charging management module 240, the power management module 241, the wireless communication module 260, the audio module 270, the speaker 270A, the receiver 270B, the microphone 270C, the camera 293, and the display 294 that are shown in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 200. The controller may generate an operation control signal based on an instruction operation code and a time sequence signal, and complete control of instruction fetching and instruction execution.

The memory may be further disposed in the processor 210, and is configured to store instructions and data. In some embodiments, the memory in the processor 210 is a cache memory. The memory may store instructions or data that has been used or cyclically used by the processor 210. If the processor 210 needs to use the instructions or the data again, the instructions or the data may be directly invoked from the memory. In this way, repeated access is avoided, and waiting time of the processor 210 is reduced. This improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be used for audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transfer an audio signal to the wireless communication module 260 through the I2S interface.

The PCM interface may also be used for audio communication, to sample, quantize, and encode an analog signal. In some embodiments, the audio module 270 may be coupled to the wireless communication module 260 through a PCM bus interface.

In some embodiments, the audio module 270 may also transfer an audio signal to the wireless communication module 260 through the PCM interface. Both the I2S interface and the PCM interface may be used for audio communication.

The UART interface is a universal serial data bus, and is used for asynchronous communication. The bus may be a bidirectional communication bus. The bus converts to-be-transmitted data between serial communication and parallel communication.

In some embodiments, the UART interface is usually configured to connect the processor 210 and the wireless communication module 260. For example, the processor 210 communicates with a Bluetooth module in the wireless communication module 260 through the UART interface, to implement a Bluetooth function. In some embodiments, the audio module 270 may transfer an audio signal to the wireless communication module 260 through the UART interface, to implement a function of playing music by using a Bluetooth headset.

The MIPI interface may be configured to connect the processor 210 to a peripheral component such as the display 294 or the camera 293. The MIPI interfaces include a camera serial interface (camera serial interface, CSI) and a display serial interface (display serial interface, DSI). In some embodiments, the processor 210 communicates with the camera 293 through the CSI interface, to implement a photographing function of the electronic device 200. The processor 210 communicates with the display 294 through the DSI interface, to implement a display function of the electronic device 200.

The GPIO interface may be configured by using software. The GPIO interface may be configured as a control signal or a data signal. In some embodiments, the GPIO interface may be configured to connect the processor 210 to the camera 293, the display 294, the wireless communication module 260, the audio module 270, the sensor module 280, and the like. The GPIO interface may be further configured as the I2C interface, the I2S interface, the UART interface, the MIPI interface, or the like.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device 200, may be configured to transmit data between the electronic device 200 and a peripheral device, or may be configured to connect to a headset, to play audio by using the headset. The interface may be further configured to connect to another electronic device, for example, an AR device.

It may be understood that an interface connection relationship between the modules shown in this embodiment of this application is merely an example for description, and does not constitute a structural limitation on the electronic device 200. In some other embodiments of this application, the electronic device 200 may alternatively use an interface connection manner different from that in the foregoing embodiment, or a combination of a plurality of interface connection manners.

The charging management module 240 is configured to receive a charging input from a charger. The charger may be a wireless charger or a wired charger. In some embodiments of wired charging, the charging management module 240 may receive a charging input from the wired charger through the USB interface 230. In some embodiments of wireless charging, the charging management module 240 may receive a wireless charging input through a wireless charging coil of the electronic device 200. The charging management module 240 may supply power to the electronic device by using the power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the internal memory 221, an external memory, the display 294, the camera 293, the wireless communication module 260, and the like. The power management module 241 may be further configured to monitor parameters such as a battery capacity, a quantity of battery cycles, and a battery health status (an electric leakage or an impedance).

In some other embodiments, the power management module 241 may also be disposed in the processor 210. In some other embodiments, the power management module 241 and the charging management module 240 may alternatively be disposed in a same device.

A wireless communication function of the electronic device 200 may be implemented by using the antennas 1, the antennas 2, the mobile communication module 250, the wireless communication module 260, the modem processor, the baseband processor, and the like.

The antennas 1 and the antennas 2 are configured to transmit and receive an electromagnetic wave signal. Each antenna in the electronic device 200 may be configured to cover one or more communication frequency bands. Different antennas may further be multiplexed, to improve antenna usage. For example, the antennas 1 may be multiplexed as diversity antennas of a wireless local area network. In some other embodiments, the antenna may be used in combination with a tuning switch.

The mobile communication module 250 may provide a solution that is applied to the electronic device 200 and that includes wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave through the antennas 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antennas 1.

In some embodiments, the antennas 1 may be coupled by using a plurality of antennas. For example, the antennas 1 may include an antenna one 2501, an antenna two 2502, an antenna three 2503, and an antenna four 2504.

In some embodiments, at least some functional modules of the mobile communication module 250 may be disposed in the processor 210. In some embodiments, at least some functional modules of the mobile communication module 250 may be disposed in a same component as at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 270A, the receiver 270B, or the like), or displays an image or a video by using the display 294. In some embodiments, the modem processor may be an independent device. In some other embodiments, the modem processor may be independent of the processor 210, and is disposed in a same component as the mobile communication module 250 or another functional module.

The wireless communication module 260 may provide a solution that is applied to the electronic device 200 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 260 may be one or more devices that integrate at least one communication processing module. The wireless communication module 260 receives an electromagnetic wave through the antennas 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antennas 2.

The wireless communication module 260 is also coupled to a plurality of antennas, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (New Radio, NR), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function by using the GPU, the display 294, the application processor, and the like. The GPU is a microprocessor for image processing, and is connected to the display 294 and the application processor. The GPU is configured to perform mathematical and geometric calculations for graphics rendering. The processor 210 may include one or more GPUs that execute program instructions to generate or change display information.

The display 294 is configured to display an image, a video, and the like. For example, in a teaching video and a user movement picture video in this embodiment of this application, the display 294 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1.

The electronic device 200 may implement a photographing function by using the ISP, the camera 293, the video codec, the GPU, the display 294, the application processor, and the like.

The ISP is configured to process data fed back by the camera 293. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye. The ISP may further perform algorithm optimization on noise of an image, brightness, and complexion. The ISP may further optimize parameters such as an exposure and a color temperature of a photographing scene. In some embodiments, the ISP may be disposed in the camera 293.

The camera 293 is configured to capture a static image or a video. An object generates an optical image by using the lens and is projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV In some embodiments, the electronic device 200 may include one or N cameras 293, where N is a positive integer greater than 1.

The digital signal processor is configured to process a digital signal, and may further process another digital signal in addition to a digital image signal. For example, when the electronic device 200 selects a frequency, the digital signal processor is configured to perform Fourier transform on frequency energy and the like.

The video codec is configured to compress or decompress a digital video. The electronic device 200 may support one or more video codecs. In this way, the electronic device 200 may play or record videos in a plurality of encoding formats, for example, a moving picture experts group (moving picture experts group, MPEG) 1, an MPEG2, an MPEG3 and an MPEG4.

The NPU is a neural-network (neural-network, NN) computing processor. The NPU quickly processes input information by referring to a structure of a biological neural network, for example, a transmission mode between human brain neurons, and may further continuously perform self-learning. The NPU can implement applications such as intelligent cognition of the electronic device 200. For example, image recognition, facial recognition, speech recognition, and a text understanding.

In this embodiment of this application, the NPU or another processor may be configured to perform an operation such as analysis processing on an image in a video stored in the electronic device 200.

The external memory interface 220 may be configured to connect to an external memory card, for example, a micro SD card, to extend a storage capability of the electronic device 200. The external memory card communicates with the processor 210 through the external memory interface 220, to implement a data storage function. For example, files such as music and a video are stored in the external memory card.

The internal memory 221 may be configured to store computer-executable program code, where the executable program code includes instructions. The processor 210 runs the instructions stored in the internal memory 221, to perform various function applications and data processing of the electronic device 200. The internal memory 221 may include a program storage area and a data storage area. The program storage area may store an operating system and an application required by at least one function (for example, a sound play function and an image play function). The data storage area may store data (such as audio data and a phone book) created during use of the electronic device 200.

In addition, the internal memory 221 may include a high speed random access memory, and may further include a nonvolatile memory, for example, at least one magnetic disk storage device, a flash storage device, or a universal flash memory (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules in the audio module 270 are disposed in the processor 210.

The speaker 270A, also referred to as a "horn", is configured to convert an audio electrical signal into a sound signal. The electronic device 200 may listen to music or answer a hands-free call through the speaker 270A. For example, the speaker may play a comparison analysis result provided in this embodiment of this application.

The receiver 270B, also referred to as an "earpiece", is configured to convert an audio electrical signal into a sound signal. When the electronic device 200 answers a call or receives voice information, the receiver 270B may be put close to a human ear to listen to a voice.

The microphone 270C, also referred to as a "mike" or a "voice tube", is configured to convert a sound signal into an electrical signal. When making a call or sending voice information, a user may make a sound by moving a human mouth close to the microphone 270C to input a sound signal into the microphone 270C. At least one microphone 270C may be disposed in the electronic device 200. In some other embodiments, two microphones 270C may be disposed in the electronic device 200, to colle ct a sound signal and further implement a noise reduction function. In some other embodiments, three, four, or more microphones 270C may alternatively be disposed in the electronic device 200, to collect a sound signal, implement noise reduction, and identify a sound source, to implement a directional recording function and the like.

The headset jack 270D is configured to connect to a wired headset. The headset interface 270D may be the USB interface 230, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are many types of pressure sensors 280A, for example, a resistive pressure sensor, an inductive pressure sensor, and a capacitive pressure sensor. The capacitive pressure sensor may include at least two parallel plates made of conductive materials. When a force is applied to the pressure sensor 280A, a capacitance between electrodes changes. The electronic device 200 determines pressure intensity based on a capacitance change. When a touch operation is performed on the display 294, the electronic device 200 detects intensity of the touch operation by using the pressure sensor 280A. The electronic device 200 may also calculate a touch position based on a detection signal of the pressure sensor 280A.

In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 280B may be configured to determine a motion posture of the electronic device 200. In some embodiments, an angular velocity of the electronic device 200 around three axes (namely, x, y, and z axes) may be determined by using the gyroscope sensor 280B. The gyroscope sensor 280B may be configured to perform image stabilization during photographing. For example, when a shutter is pressed, the gyroscope sensor 280B detects an angle at which the electronic device 200 jitters, calculates, based on the angle, a distance for which a lens module needs to compensate, and enables the lens to cancel the jitter of the electronic device 200 through reverse motion, to implement image stabilization. The gyroscope sensor 280B may be further used in a navigation scenario and a motion sensing game scenario.

The barometric pressure sensor 280C is configured to measure barometric pressure. In some embodiments, the electronic device 200 calculates an altitude by using a barometric pressure value measured by the barometric pressure sensor 280C, to assist in positioning and navigation.

The magnetic sensor 280D includes a Hall effect sensor. The electronic device 200 may detect opening and closing of a flip cover by using the magnetic sensor 280D. In some embodiments, when the electronic device 200 is a flip phone, the electronic device 200 can detect opening and closing of a flip cover based on the magnetic sensor 280D. Further, a feature such as automatic unlocking upon opening of the flip cover is set based on a detected opening or closing state of the flip cover.

The acceleration sensor 280E may detect a magnitude of an acceleration of the electronic device 200 in various directions (usually on three axes). A magnitude and a direction of gravity may be detected when the electronic device 200 is still. The acceleration sensor 180E may be further configured to identify a posture of the electronic device, and is applied to an application such as landscape/portrait switching and a pedometer.

The distance sensor 280F is configured to measure a distance. The electronic device 200 may measure a distance by using infrared or laser. In some embodiments, in a photographing scene, the electronic device 200 may perform ranging by using the distance sensor 280F to implement fast focusing.

The optical proximity sensor 280G may include, for example, a light emitting diode (LED) and an optical detector such as a photodiode. The light emitting diode may be an infrared light emitting diode. The electronic device 200 emits infrared light by using the light emitting diode. The electronic device 200 detects infrared reflected light from a nearby object by using the photodiode. When sufficient reflected light is detected, it may be determined that there is an object near the electronic device 200. When insufficient reflected light is detected, the electronic device 200 may determine that there is no object near the electronic device 200. The electronic device 200 may detect, by using the optical proximity sensor 280G, that a user holds the electronic device 200 close to an ear for a call, to automatically turn off a screen for power saving. The optical proximity sensor 280G may also be used in a flip cover mode or a pocket mode to automatically unlock or lock a screen.

The ambient light sensor 280L is configured to sense ambient light brightness. The electronic device 200 may adaptively adjust brightness of the display 294 based on sensed ambient light brightness. The ambient light sensor 280L may also be configured to automatically adjust white balance during photographing. The ambient light sensor 280L may also cooperate with the optical proximity sensor 280G to detect whether the electronic device 200 is in a pocket, to prevent an accidental touch.

The fingerprint sensor 280H is configured to collect a fingerprint. The electronic device 200 may use a feature of a collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using a temperature detected by the temperature sensor 280J. For example, when a temperature reported by the temperature sensor 280J exceeds a threshold, the electronic device 200 lowers performance of a processor near the temperature sensor 280J, to reduce power consumption and implement thermal protection. In some other embodiments, when the temperature is lower than another threshold, the electronic device 200 heats the battery 242, to avoid a case in which the electronic device 200 is abnormally shut down due to a low temperature. In some other embodiments, when the temperature is lower than still another threshold, the electronic device 200 boosts an output voltage of the battery 242, to avoid an abnormal shutdown caused by a low temperature.

The touch sensor 280K is also referred to as a "touch panel". The touch sensor 280K may be disposed on the display 294. The touch sensor 280K and the display 294 constitute a touchscreen, which is also referred to as a "touch screen". The touch sensor 280K is configured to detect a touch operation performed on or near the touch sensor 280K. The touch sensor may transfer a detected touch operation to the application processor, to determine a touch event type. A visual output related to the touch operation may be provided on the display 294. In some other embodiments, the touch sensor 280K may be also disposed on a surface of the electronic device 200 at a position different from a position of the display 294.

The bone conduction sensor 280M may obtain a vibration signal. In some embodiments, the bone conduction sensor 280M may obtain a vibration signal of a vibration bone of a human vocal part. The bone conduction sensor 280M may also contact a human pulse to receive a blood pressure beating signal.

In some embodiments, the bone conduction sensor 280M may also be disposed in a headset, to obtain a bone conduction headset. The audio module 270 may obtain a voice signal through parsing based on the vibration signal that is of the vibration bone of the vocal part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button, or may be a touch key. The electronic device 200 may receive a button input, and generate a signal input of a button related to a user setting and function control of the electronic device 200.

The motor 291 may generate a vibration prompt. The motor 291 may be used for an incoming call vibration prompt, or may be used for a touch vibration feedback. For example, touch operations performed on different applications (for example, photographing and audio playing) may correspond to different vibration feedback effects. The motor 291 may also correspond to different vibration feedback effects for touch operations performed on different areas of the display 294. Different application scenarios (for example, a time reminder, information receiving, an alarm clock, and a game) may also correspond to different vibration feedback effects. A touch vibration feedback effect may further be customized.

The indicator 292 may be an indicator light, and may be configured to indicate a charging state and a power change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano SIM card, a micro SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 may also be compatible with an external memory card. The electronic device 200 interacts with a network by using the SIM card, to implement functions such as a call and data communication. In some embodiments, the electronic device 200 uses an eSIM, namely, an embedded SIM card. The eSIM card may be embedded in the electronic device 200, and cannot be separated from the electronic device 200.

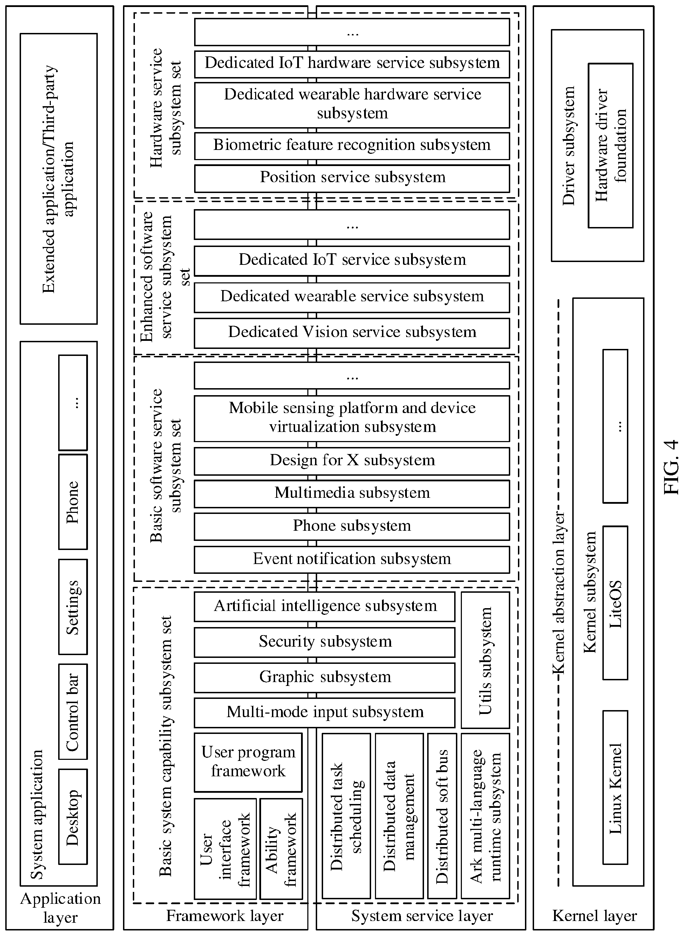

FIG. 4 is a schematic diagram of a software structure of the electronic device 200 according to an embodiment of this application. An operating system of the electronic device 200 may be Android (Android), an iPhone mobile operating system (iOS), or a Harmony system (HarmonyOS). Herein, the Harmony system is used as an example for description.

In some embodiments, the Harmony system may be divided into four layers, including a kernel layer, a system service layer, a framework layer, and an application layer. The layers communicate with each other through a software interface.

As shown in FIG. 4, the kernel layer includes a kernel abstract layer (Kernel Abstract Layer, KAL) and a driver subsystem. The KAL includes a plurality of kernels such as a Linux system kernel Linux Kernel and a lightweight IoT system kernel LiteOS. The driver subsystem may include a hardware driver foundation (Hardware Driver Foundation, HDF). The hardware driver foundation can provide a unified peripheral access capability and a driver development and management framework.

A multi-kernel kernel layer may select a corresponding kernel for processing based on a system requirement.

The system service layer is a core capability set of the Harmony system. The system service layer provides a service for an application at the framework layer. The layer may include:

a basic system capability subsystem set providing a basic capability for operations such as running, scheduling, and migration of distributed applications on a plurality of Harmony system devices, and including subsystems such as a distributed soft bus subsystem, a distributed data management subsystem, a distributed task scheduling subsystem, an Ark multi-language runtime subsystem, a Utils subsystem, a multi-mode input subsystem, a graphic subsystem, a security subsystem, and an artificial intelligence (Artificial Intelligence, AI) subsystem, where the Ark multi-language runtime subsystem provides a C, C++, or JavaScript (JS) multi-language runtime and a basic system class library, and may also provide runtime for a Java program (that is, a part developed by using a Java language in an application or a framework layer) that is staticized by an Ark compiler;

a basic software service subsystem set providing public and common software services for the Harmony subsystem, and including subsystems such as an event notification subsystem, a phone subsystem, a multimedia subsystem, a design for X subsystem (Design For X, DFX), and an MSDP&DV subsystem;

an enhanced software service subsystem set providing the Harmony system with differentiated capability enhancement software services for different devices, and including a dedicated Vision service subsystem, a dedicated wearable service subsystem, and a dedicated IoT (Internet of Things, IoT) service subsystem; and

a hardware service subsystem set providing a hardware service for the Harmony system, and including subsystems such as a position service subsystem, a biometric feature recognition subsystem, a dedicated wearable hardware service subsystem, and a dedicated IoT hardware service subsystem.

The framework layer provides, for Harmony system application development, multi-language user program frameworks and ability (Ability) frameworks such as Java, C, C++, and JS, two user interface (User Interface, UI) frameworks (including a Java UI framework for a Java language and a JS UI framework for a JS language), and multi-language framework application programming interfaces (Application Programming Interface s, APIs) for various software and hardware services open to an outside. The APIs supported by Harmony system devices vary based on a degree of system componentization.

The application layer includes a system application and a third-party non-system application. The system application may include an application that is installed by default on the electronic device. For example, Desktop, Control bar, Setting, or Phone. An extended application may be an optional application developed and designed by a manufacturer of the electronic device, for example, an application like Electronic device manager, Device change and migration, Note, or Weather. The third-party non-system application may be developed by another vendor, but may run an application in the Harmony system, for example, an application like Game, Navigation, Social networking, or Shopping.

The application of the Harmony system consists of one or more meta-programs (Feature Ability, FA) or meta-services (Particle Ability, PA). The FA has a UI and provides a capability of interacting with a user. The PA does not have a UI, but provides a capability of running a task in a background and unifying data access abstraction. The PA provides support for the FA. For example, the PA provides a computing capability as a background service or provides a data access capability as a data warehouse. An application developed based on the FA or PA can implement a specific business characteristic and achieve cross-device scheduling and distribution. This provides a user with a consistent and efficient experience.

A plurality of electronic devices running the Harmony system can implement hardware mutual assistance and resource sharing by using a distributed soft bus, distributed device virtualization, distributed data management, and distributed task scheduling.

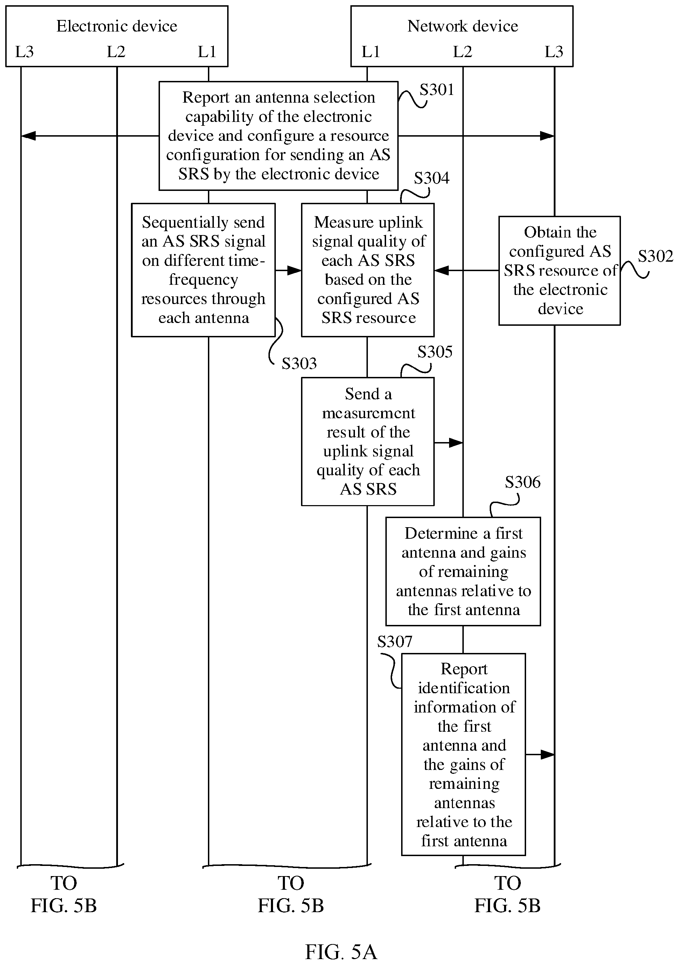

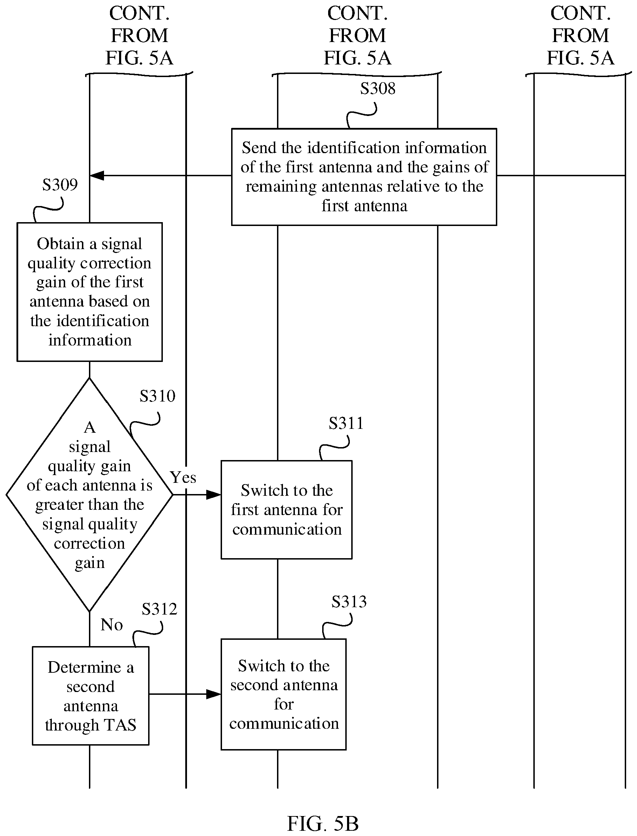

FIG. 5A and FIG. 5B are a schematic flowchart of an antenna selection method according to this application. As an example instead of a limitation, the method may be applied to the foregoing electronic device and network device.

It should be noted that an electronic device and a network device in FIG. 5A each have three layers: L1, L2, and L3. The L1 is a physical layer (PHY) and may be used to transmit a DCI message. The L2 is a data link layer, including media acce ss control (Media Access Control, MAC), radio link control (Radio Link Control, RLC), a packet data convergence protocol (Packet Data Convergence Protocol, PDCP), and a service data adaptation protocol (Service Data Adaptation Protocol, SDAP), and may be used to transmit a MAC CE message. The L3 is a radio resource control layer, and is used to transmit an RRC message.

The method includes the following steps.

S301: The L3 of the electronic device interacts with the L3 of the network device, the network device obtains an antenna selection capability of the electronic device, and the electronic device receives an AS SRS resource configured by the network device.

In some implementations, the antenna selection capability includes a quantity of antennas and identification information of each antenna, and includes whether closed-loop antenna selection is supported. For example, there may be four antennas, and identification information of the four antennas may be a port 0, a port 1, a port 2, and a port 3. The closed-loop antenna selection means that a measurement signal used for antenna selection can be sent, and an antenna used for communication can be switched based on a received antenna selection message. The antenna selection capability also includes a transmit antenna selection (Transmit Antenna Selection, TAS) technology. This technology obtains downlink energy of each antenna, and then obtains a downlink energy difference by subtracting diversity energy from main energy in each downlink energy. When the downlink energy difference is greater than a preset threshold, a currently measured antenna is determined as an optimal antenna. Finally, whether an antenna currently used for communication is the optimal antenna is detected. If the antenna currently used for communication is the optimal antenna, identification information of the downlink optimal antenna is recorded. If the antenna currently used for communication is not the optimal antenna, the currently measured antenna is used for communication, and then identification information of the downlink optimal antenna is recorded.

It should be noted that the AS SRS resource is an SRS resource in time domain. In the time domain, an SRS may occupy a last symbol in a normal uplink subframe or a special subframe. In a time division duplexing (Time Division Duplexing, TDD) system, the SRS may be transmitted through one or two single-carrier frequency division multiple access (Single-carrier frequency division multiple access, SC-FDMA) symbols in an uplink pilot timeslot (Uplink Pilot Time Slot, UpPTS). In addition, an SRS transmission periodicity (Tsks) may be selected from a time set {2, 5, 10, 20, 40, 80, 160, 320} in a unit of millisecond (ms). The SRS resource includes a determined SC-FDMA and a determined transmission periodicity.

In some implementations, the network device may further configure a Non-CB SRS resource or a CB SRS resource for the electronic device based on an actual requirement. The non-CB SRS resource or the CB SRS resource is similar to the AS SRS resource, and details are not described herein again.

In some implementations, the network device may configure a corresponding quantity of AS SRS resources based on a quantity of antennas of the electronic device. For example, if there are four antennas, one corresponding AS SRS resource may be configured for each antenna. That is, four sets of AS SRS resources may be configured.

S302: The L3 of the network device obtains the configured AS SRS resource of the electronic device and reports the resource to the L1 of the network device.

S303: The L1 of the electronic device sequentially sends an AS SRS signal on different time-frequency resources through each antenna.

S304: The L1 of the network device measures uplink signal quality of each AS SRS based on the configured AS SRS resource.

In some implementations, it is assumed that the L1 of the electronic device includes four antennas, a corresponding AS SRS resource is configured for each antenna, and the AS SRS is sent sequentially through the four antennas by using the corresponding AS SRS resource. After receiving the AS SRS resource that is sent by the L3 and that is configured by the electronic device, the L1 of the network device measures an uplink signal of the AS SRS on each AS SRS resource. After the four antennas of the electronic device perform transmission in turn, the network device can measure uplink signal quality of the four AS SRSs.

The uplink signal quality of the AS SRS may be indicated by measuring a reference signal received power (Reference Signal Receiving Power, RSRP) or a signal to interference plus noise ratio (Signal to Interference plus Noise Ratio, SINR) of the AS SRS.

In an example, when the RSRP indicates the uplink signal quality, a larger RSRP indicates better uplink signal quality. A unit of the RSRP is dBm. For example, refer to the example of the antenna in S301. If an RSRP of the port 1 is -55 dBm, an RSRP of the port 2 is -90 dBm, an RSRP of the port 3 is -77 dBm, and an RSRP of the port 4 is -104 dBm, uplink signal quality of the port 1 is the best, followed by the port 3, then followed by the port 2, and finally followed by the port 4.

When the SINR indicates the uplink signal quality, a larger SINR indicates better uplink signal quality. The SINR may be calculated based on the RSRP. The SINR may be calculated according to the following formula:

$$SINR = \frac{RSRP}{I+N}$$

An interference power (I) is a sum of powers of neighboring cells received on resource elements (Resource Elements, REs) occupied by the AS SRS signal received by the network device, a noise power (N) is background noise, and a value of N is related to a specific measurement bandwidth and a receiver noise factor.

S305: The L1 of the network device sends a measurement result of the uplink signal quality of each AS SRS to the L2 of the network device.

S306: The L2 of the network device determines a first antenna and gains of remaining antennas relative to the first antenna.

In some implementations, the L2 of the network device may determine an antenna with a largest RSRP as the first antenna, or determine an antenna with a largest SINR as the first antenna.

In another implementation, the L2 of the network device may calculate an equivalent link loss (Path Loss) based on the RSRP and an AS SRS transmit power of the antenna corresponding to the RSRP, and use an antenna with a lowest equivalent link loss as the first antenna. For example, the equivalent link loss may be a signal power of a reference signal, that is, an RSRP difference between AS SRSs of corresponding antennas. The signal power of the reference signal may be obtained from a system message of the network device.

S307: The L2 of the network device reports identification information of the first antenna and the gains of remaining antennas relative to the first antenna to the L3 of the network device.

In some implementations, a difference between an RSRP of each remaining antenna and an RSRP of the first antenna may be used as a gain of the antenna relative to the first antenna. Alternatively, a difference between an SINR of each remaining antenna and an SINR of the first antenna may be used as a gain of the antenna relative to the first antenna. A gain algorithm is not limited in this application.

S308: The L3 of the network device sends the identification information of the first antenna and the gains of remaining antennas relative to the first antenna to the L3 of the electronic device by using an RRC message.

S309: The L3 of the electronic device obtains a signal quality correction gain of the first antenna based on the identification information.

In some implementation, the signal quality correction gain may be a reduced SAR value, and each antenna corresponds to a preset reduced SAR value. The reduced SAR value corresponding to the antenna may be obtained from attribute information of the antenna based on identification information of the antenna. The attribute information of the antenna is determined when the electronic device is manufactured. For example, there may be four antennas, and identification information of the four antennas may be a port 0, a port 1, a port 2, and a port 3. Reduced SAR values of the port 0, the port 1, the port 2, and the port 3 are 2 dB, 5 dB, 6 dB, and 7 dB respectively.

S310: The L3 of the electronic device determines whether a signal quality gain of each antenna is greater than the signal quality correction gain. If the signal quality gain of each antenna is greater than the signal quality correction gain, S311 is performed. If the signal quality gain of each antenna is not greater than the signal quality correction gain, S312 is performed.

In some implementations, refer to the example in S309. If an antenna corresponding to the port 0 is the first antenna, gains of the port 1, the port 2, and the port 3 relative to the port 0 may be 2 dB, 4 dB, and 3 dB respectively. After the reduced SAR values are corrected, comprehensive gains of the port 0, the port 1, the port 2, and the port 3 are -2dB (0dB-2dB), -3dB (2dB-5dB) dB, -2 dB (4 dB-6 dB), and -4 dB (3 dB-7 dB) respectively. The comprehensive gain of the port 0 is the largest, and therefore S311 is performed. Alternatively, if an antenna corresponding to the port 0 is the first antenna, gains of the port 1, the port 2, and the port 3 relative to the port 0 may be 2 dB, 4 dB, and 6 dB respectively. After the reduced SAR values are corrected, comprehensive gains of the port 0, the port 1, the port 2, and the port 3 are -2dB (0dB-2dB), -6dB (2dB-5dB) dB, -2 dB (4 dB-6 dB), and -1 dB (3 dB-7 dB) respectively. The comprehensive gain of the port 3 is greater than that of the port 0, and therefore S312 is performed.

S311: The L1 of the electronic device switches to the first antenna for communication.

In some implementations, if the signal quality gain of each antenna is greater than the reduced SAR value, it indicates that after an SAR of a current first antenna is reduced, communication quality of the current first antenna is still better than that of remaining antennas. That is, the first antenna is determined as an optimal antenna in a current scenario, and communication may be performed through the first antenna.

S312: The L3 of the electronic device determines a second antenna through TAS.

S313: The L1 of the electronic device switches to the second antenna for communication.

In some other implementations, if some signal quality gains of antennas are less than the reduced SAR value, it indicates that after an SAR of a current first antenna is reduced, communication quality of the current first antenna is not optimal. Therefore, an optimal antenna (that is, the second antenna) needs to be reselected through TAS, and then communication is performed through the second antenna.

In the foregoing embodiment, the network device notifies, by using the RRC message, the electronic device of the optimal antenna and a selection result of the remaining antennas relative to the optimal antenna.

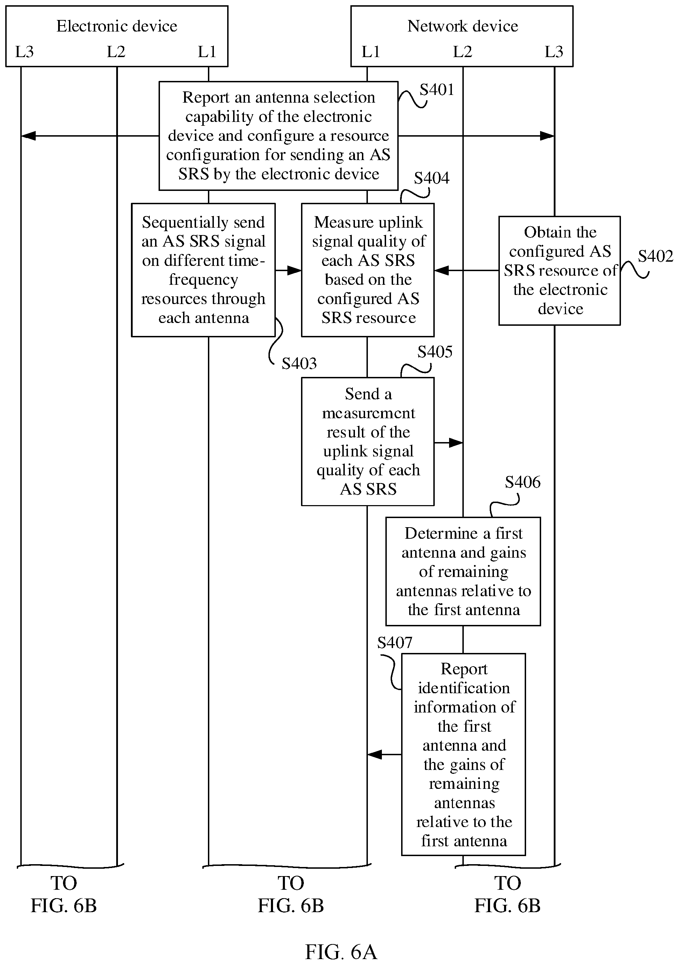

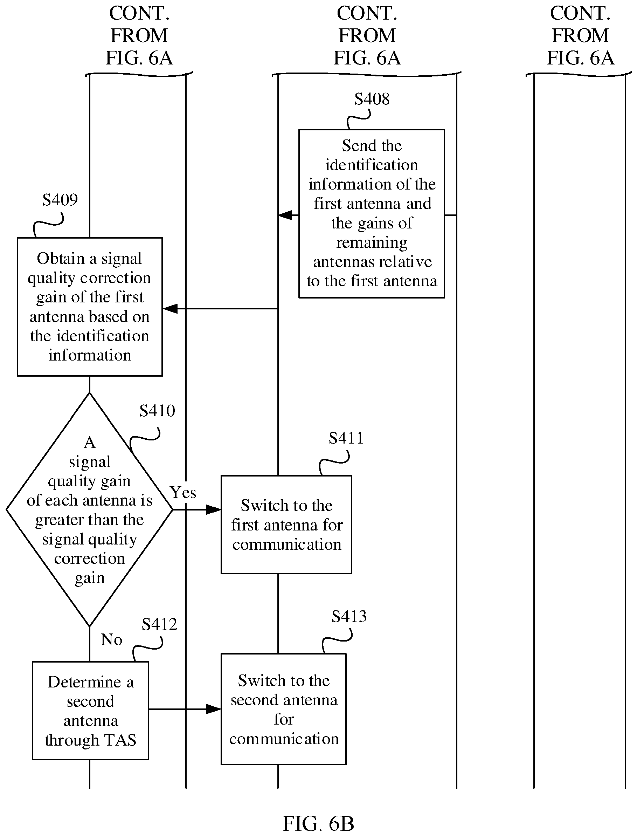

Refer to FIG. 6A and FIG. 6B. In some implementations, the network device may further send a notification to the electronic device by using a DCI message, to implement an antenna selection method provided in this application. The method includes the following steps.

S401: An L3 of an electronic device interacts with an L3 of a network device, the network device obtains an antenna selection capability of the electronic device, and the electronic device receives an AS SRS resource configured by the network device.

S402: The L3 of the network device obtains the configured AS SRS resource of the electronic device and reports the resource to an L1 of the network device.

S403: An L1 of the electronic device sequentially sends an AS SRS signal on different time-frequency resources through each antenna.

S404: The L1 of the network device measures uplink signal quality of each AS SRS based on the configured AS SRS resource.

S405: The L1 of the network device sends a measurement result of the uplink signal quality of each AS SRS to an L2 of the network device.

S406: The L2 of the network device determines a first antenna and gains of remaining antennas relative to the first antenna.

Execution manners of S401 to S406 are the same as those of S301 to S306, and details are not described herein again.

S407: The L2 of the network device reports identification information of the first antenna and the gains of remaining antennas relative to the first antenna to the L1 of the network device.

S408: The L1 of the network device sends the identification information of the first antenna and the gains of remaining antennas relative to the first antenna to the L1 of the electronic device by using the DCI message, and the L1 of the electronic device reports the identification information of the first antenna and the gains of remaining antennas relative to the first antenna to the L3 of the electronic device.

The DCI message is a message transmitted between physical layers. After receiving the identification information of the first antenna and the gains of remaining antennas relative to the first antenna that are reported by the L2, the L1 of the network device sends the identification information of the first antenna and the gains of remaining antennas relative to the first antenna to the L1 of the electronic device by using the DCI message.

S409: The L3 of the electronic device obtains a signal quality correction gain of the first antenna based on the identification information.

S410: The L3 of the electronic device determines whether a signal quality gain of each antenna is greater than the signal quality correction gain. If the signal quality gain of each antenna is greater than the signal quality correction gain, S411 is performed. If the signal quality gain of each antenna is not greater than the signal quality correction gain, S412 is performed.

S411: The L1 of the electronic device switches to the first antenna for communication.

S412: The L3 of the electronic device determines a second antenna through TAS.

S413: The L1 of the electronic device switches to the second antenna for communication.

Execution manners of S409 to S413 are the same as those of S309 to S313, and details are not described herein again.

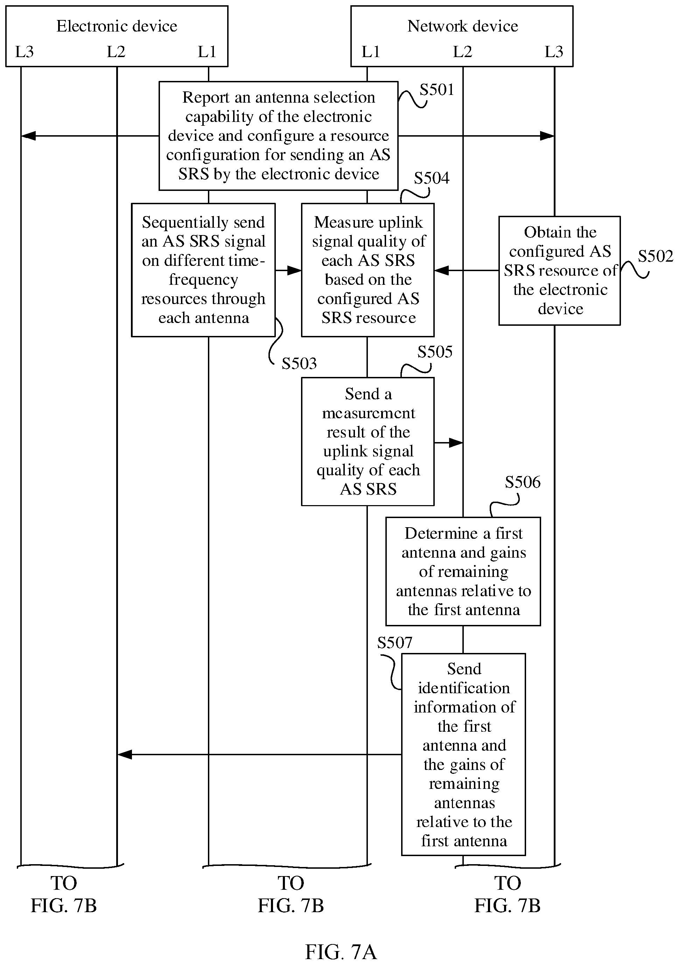

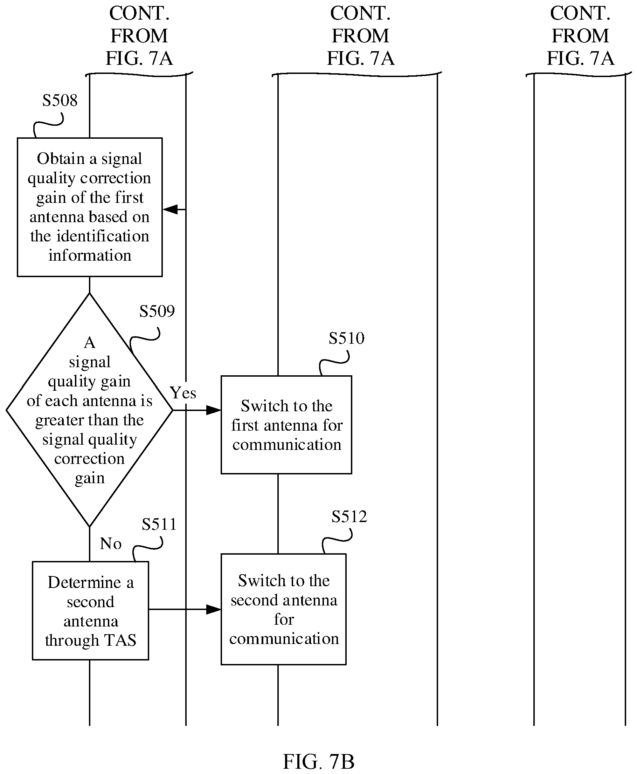

Refer to FIG. 7A and FIG. 7B. In some implementations, the network device may further send a notification to the electronic device by using a MAC CE message, to implement an antenna selection method provided in this application. The method includes the following steps.

S501: An L3 of an electronic device interacts with an L3 of a network device, the network device obtains an antenna selection capability of the electronic device, and the electronic device receives an AS SRS resource configured by the network device.

S502: The L3 of the network device obtains the configured AS SRS resource of the electronic device and reports the resource to an L1 of the network device.

S503: An L1 of the electronic device sequentially sends an AS SRS signal on different time-frequency resources through each antenna.

S504: The L1 of the network device measures uplink signal quality of each AS SRS based on the configured AS SRS resource.

S505: The L1 of the network device sends a measurement result of the uplink signal quality of each AS SRS to an L2 of the network device.

S506: The L2 of the network device determines a first antenna and gains of remaining antennas relative to the first antenna.

Execution manners of S501 to S506 are the same as those of S301 to S307, and details are not described herein again.

S507: The L2 of the network device sends identification information of the first antenna and the gains of remaining antennas relative to the first antenna to an L2 of the electronic device by using the MAC CE message, and the L2 of the electronic device reports the identification information of the first antenna and the gains of remaining antennas relative to the first antenna to the L3 of the electronic device.

The MAC CE message is a message transmitted between data link layers. After determining the identification information of the first antenna and the gains of remaining antennas relative to the first antenna, the L2 of the network device sends the identification information of the first antenna and the gains of remaining antennas to the L2 of the electronic device by using the MAC CE message.

S508: The L3 of the electronic device obtains a signal quality correction gain of the first antenna based on the identification information.

S509: The L3 of the electronic device determines whether a signal quality gain of each antenna is greater than the signal quality correction gain. If the signal quality gain of each antenna is greater than the signal quality correction gain, S510 is performed. If the signal quality gain of each antenna is not greater than the signal quality correction gain, S511 is performed.

S510: The L1 of the electronic device switches to the first antenna for communication.

S511: The L3 of the electronic device determines a second antenna through TAS.

S512: The L1 of the electronic device switches to the second antenna for communication.

Execution manners of S508 to S512 are the same as those of S309 to S313, and details are not described herein again.

It should be understood that sequence numbers of the steps in the foregoing embodiments do not mean an execution order. The execution order of processes should be determined based on functions and internal logic of the processes, and should not constitute any limitation on implementation processes of embodiments of this application.

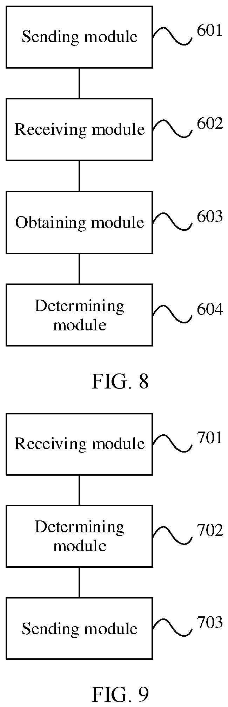

Corresponding to the antenna selection method applied to the electronic device in the foregoing embodiment, FIG. 8 is a structural block diagram of an antenna selection apparatus according to an embodiment of this application. For ease of description, only a part related to this embodiment of this application is shown.

Refer to FIG. 8. The apparatus is applied to an electronic device, and includes:

a sending module 601, configured to send an antenna switch channel sounding reference signal to a network device through each antenna;

a receiving module 602, configured to receive an antenna selection message sent by the network device, where the antenna selection message indicates a first antenna in a plurality of antennas and a signal quality gain of each remaining antenna relative to the first antenna;

an obtaining module 603, configured to obtain a preset signal quality correction gain of the first antenna; and

a determining module 604, configured to: when the signal quality gain of each remaining antenna is greater than the signal quality correction gain of the first antenna, determine to use the first antenna to perform communication.

In some implementations, the determining module 604 is further configured to: when a signal quality gain of any one of the antennas is less than the signal quality correction gain, determine a second antenna based on downlink signal quality of each antenna. The second antenna is used to perform communication.

In some implementations, the antenna selection message includes one of an RRC message, a DCI message, or a MAC CE message.

Corresponding to the antenna selection method applied to the network device in the foregoing embodiment, FIG. 9 is a structural block diagram of an antenna selection apparatus according to an embodiment of this application. For ease of description, only a part related to this embodiment of this application is shown.

Refer to FIG. 9. The apparatus is applied to a network device, and includes:

a receiving module 701, configured to receive a plurality of antenna switch channel sounding reference signals from an electronic device;

a determining module 702, configured to determine, based on uplink signal quality of the plurality of antenna switch channel sounding reference signals, a first antenna and a signal quality gain of each remaining antenna relative to the first antenna, where the first antenna is an antenna indicated by an antenna identifier corresponding to an antenna switch channel sounding reference signal with best uplink signal quality; and

a sending module 703, configured to send an antenna selection message to the electronic device, where the antenna selection message indicates the first antenna in a plurality of antennas and the signal quality gain of each remaining antenna relative to the first antenna.

In some implementations, the determining module 702 is specifically configured to measure a reference signal received power of each AS SRS. When the reference signal received power indicates the uplink signal quality, a larger reference signal received power indicates better uplink signal quality. An antenna corresponding to an AS SRS with a largest reference signal received power is determined as the first antenna.

In some implementations, the determining module 702 is specifically configured to measure a signal to interference plus noise ratio of each AS SRS. When the signal to interference plus noise ratio indicates the uplink signal quality, a larger signal to interference plus noise ratio indicates better uplink signal quality. An antenna corresponding to an AS SRS with a largest signal to interference plus noise ratio is determined as the first antenna.

In some implementations, the antenna selection message includes one of an RRC message, a DCI message, or a MAC CE message.

It should be noted that because content such as information exchange and an execution process between the foregoing modules is based on a same concept as that in method embodiments of this application, for specific functions and technical effects of the content, refer to the method embodiments. Details are not described herein again.

It may be clearly understood by a person skilled in the art that, for a purpose of convenient and brief description, division of the foregoing functional units or modules is merely used as an example for description. In actual application, the foregoing functions may be allocated to different functional units or modules for implementation as required, that is, an internal structure of the apparatus is divided into different functional units or modules to implement all or some of the functions de scribed above. Functional units or modules in embodiments may be integrated into one processing unit, or each of the units may exist alone physically, or two or more units are integrated into one unit. The integrated unit may be implemented in a form of hardware, or may be implemented in a form of a software functional unit. In addition, specific names of the functional units or modules are merely used for ease of differentiation, and are not intended to limit the protection scope of this application. For a specific working process of the units or modules in the foregoing system, refer to a corresponding process in the foregoing method embodiment. Details are not described herein again.

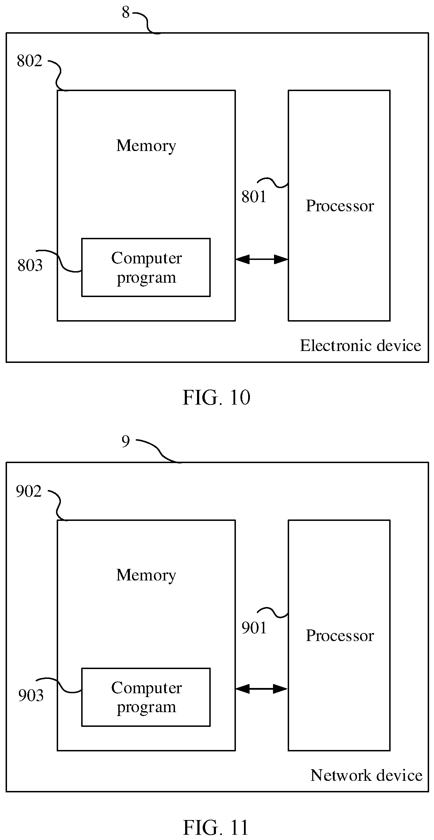

FIG. 10 is a schematic diagram of a structure of an electronic device according to an embodiment of this application. As shown in FIG. 10, the electronic device 8 in this embodiment includes at least one processor 801 (FIG. 10 shows only one processor), a memory 802, and a computer program 803 that is stored in the memory 802 and that can run on the at least one processor 801. The processor 801 executes the computer program 803 to implement the steps in the foregoing method embodiments.

The electronic device 8 may be an electronic device, for example, a mobile phone, a desktop computer, a notebook computer, a palmtop computer, or a cloud server. The electronic device may include but is not limited to the processor 801 and the memory 802. A person skilled in the art may understand that FIG. 10 is merely an example of the electronic device 8, and does not constitute a limitation on the electronic device 8. The electronic device 8 may include more or fewer components than those shown in the figure, or combine some components or different components. For example, the electronic device 8 may further include an input/output device, a network access device, and the like.

The processor 801 may be a central processing unit (Central Processing Unit, CPU). The processor 801 may alternatively be another general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or transistor logic device, a discrete hardware component, or the like. The general purpose processor may be a microprocessor, or the processor may be any conventional processor or the like.

In some embodiments, the memory 802 may be an internal storage unit of the electronic device 8, for example, a hard disk or a memory of the electronic device 8. In some other embodiments, the memory 802 may also be an external storage device of the electronic device 8, for example, a plug-in hard disk, an intelligent storage card (Smart Media Card, SMC), a secure digital (Secure Digital, SD) card, or a flash card (Flash Card) that is disposed on the electronic device 8. Further, the memory 802 may include both the internal storage unit and the external storage device of the electronic device 8. The memory 802 is configured to store an operating system, an application, a boot loader (Boot Loader), data, another program, and the like. For example, program code of a computer program. The memory 802 may be further configured to temporarily store data that has been output or is to be output.

FIG. 11 is a schematic diagram of a structure of a network device according to an embodiment of this application. As shown in FIG. 11, the network device 9 in this embodiment includes: at least one processor 901 (FIG. 11 shows only one processor), a memory 902, and a computer program 903 that is stored in the memory 902 and that can run on the at least one processor 901. The processor 901 executes the computer program 903 to implement the steps in the foregoing method embodiments.

The network device 9 may be a network device. For example, an eNB or a gNB. The network device may include but is not limited to the processor 901 and the memory 902. A person skilled in the art may understand that FIG. 11 is merely an example of the network device 9, and does not constitute a limitation on the network device 9. The network device 9 may include more or fewer components than those shown in the figure, or combine some components or different components. For example, the network device 9 may further include an input/output device, a network access device, and the like.

The processor 901 may be a central processing unit (Central Processing Unit, CPU). The processor 901 may alternatively be another general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or transistor logic device, a discrete hardware component, or the like. The general purpose processor may be a microprocessor, or the processor may be any conventional processor or the like.

In some embodiments, the memory 902 may be an internal storage unit of the network device 9, for example, a hard disk or memory of the network device 9. In some other embodiments, the memory 902 may also be an external storage device of the network device 9, for example, a plug-in hard disk, an intelligent storage card (Smart Media Card, SMC), a secure digital (Secure Digital, SD) card, or a flash card (Flash Card) that is disposed on the network device 9. Further, the memory 902 may include both the internal storage unit and the external storage device of the network device 9. The memory 902 is configured to store an operating system, an application, a boot loader (Boot Loader), data, another program, and the like. For example, program code of a computer program. The memory 902 may be further configured to temporarily store data that has been output or is to be output.

An embodiment of this application further provides a computer-readable storage medium. The computer-readable storage medium stores a computer program. When the computer program is executed by a processor, the steps in the foregoing method embodiments applied to the electronic device are implemented.

An embodiment of this application further provides a computer-readable storage medium. The computer-readable storage medium stores a computer program. When the computer program is executed by a processor, the steps in the foregoing method embodiments applied to the network device are implemented.

An embodiment of this application provides a computer program product. When the computer program product is run on a mobile terminal, the mobile terminal is enabled to implement the steps in the foregoing method embodiments applied to the electronic device.

An embodiment of this application provides a computer program product. When the computer program product is run on a mobile terminal, the mobile terminal is enabled to implement the steps in the foregoing method embodiments applied to the network device.

When the integrated unit is implemented in a form of a software functional unit and sold or used as an independent product, the integrated unit may be stored in a computer-readable storage medium. Based on such an understanding, all or some of the procedures of the method in embodiments of this application may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to an electronic device, a recording medium, a computer memory, a read-only memory (ROM, Read-Only Memory), a random access memory (RAM, Random Access Memory), an electrical carrier signal, a telecommunication signal, and a software distribution medium. For example, a USB flash drive, a removable hard disk, a magnetic disk, or an optical disk. In some jurisdictions, the computer-readable medium may not be the electrical carrier signal or the telecommunication signal according to legislation and patent practices.

An embodiment of this application provides a chip system. The chip system includes a memory and a processor. The processor executes a computer program stored in the memory, to implement the steps in the foregoing method embodiments applied to the electronic device.

An embodiment of this application provides a chip system. The chip system includes a memory and a processor. The processor executes a computer program stored in the memory, to implement the steps in the foregoing method embodiments applied to the network device.

An embodiment of this application provides a chip system. The chip system includes a processor, the processor is coupled to a computer-readable storage medium, and the processor executes a computer program stored in the computer-readable storage medium, to implement the steps in the foregoing method embodiments applied to the electronic device.

An embodiment of this application provides a chip system. The chip system includes a processor, the processor is coupled to a computer-readable storage medium, and the processor executes a computer program stored in the computer-readable storage medium, to implement the steps in the foregoing method embodiments applied to the network device.

In the foregoing embodiments, the description of each embodiment has respective focuses. For a part that is not described or recorded in detail in an embodiment, refer to related descriptions in other embodiments.

A person of ordinary skill in the art may realize that units and algorithm steps in the examples described with reference to embodiments disclosed in this specification may be implemented by electronic hardware or a combination of computer software and electronic hardware. Whether these functions are performed in a hardware or software manner depends on a specific application and a design constraint condition of a technical solution. A person skilled in the art may use different methods to implement the described functions for each specific application. However, it should not be considered that such an implementation goes beyond the scope of this application.

In embodiments provided in this application, it should be understood that the disclosed method, apparatus, and electronic device may be implemented in another manner. For example, the described apparatus embodiment is merely an example. For example, division of the module or unit is merely logical function division and may be other division in an actual implementation. For example, a plurality of units or components may be combined or integrated into another system, or some features may be ignored, or are not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, that is, may be located in one place, or may be distributed on a plurality of network units. Some or all of the units may be selected according to actual requirements to achieve the objectives of the solutions in this embodiment.

Finally, it should be noted that the foregoing descriptions are merely specific implementations of this application, but are not intended to limit the protection scope of this application. Any variation or replacement within a technical scope disclosed in this application shall fall within the protection scope of this application. Therefore, the protection scope of this application shall be subject to the protection scope of the claims.

**Claims**

1. An antenna selection method, applied to an electronic device, wherein the electronic device comprises a plurality of antennas, and the method comprises:

   sending an antenna switch channel sounding reference signal to a network device through each antenna;
   receiving an antenna selection message sent by the network device, wherein the antenna selection message indicates a first antenna in the plurality of antennas and a signal quality gain of each remaining antenna relative to the first antenna;

obtaining a preset signal quality correction gain of the first antenna; and

when the signal quality gain of each remaining antenna is greater than the signal quality correction gain of the first antenna, determining to use the first antenna to perform communication.

2. The method according to claim 1, when a signal quality gain of any one of the antennas is less than the signal quality correction gain, a second antenna is determined based on downlink signal quality of each antenna; and

the second antenna is used to perform communication.

3. The method according to claim 1 or 2, wherein the antenna selection message comprises one of a radio resource control message, a downlink control information message, or a physical layer control element message.

4. An antenna selection method, applied to a network device, wherein the method comprises:

receiving a plurality of antenna switch channel sounding reference signals from an electronic device;

determining, based on uplink signal quality of the plurality of antenna switch channel sounding reference signals, a first antenna and a signal quality gain of each remaining antenna relative to the first antenna, wherein the first antenna is an antenna indicated by an antenna identifier corresponding to an antenna switch channel sounding reference signal with best uplink signal quality; and

sending an antenna selection message to the electronic device, wherein the antenna selection message indicates the first antenna in a plurality of antennas and the signal quality gain of each remaining antenna relative to the first antenna.

5. The method according to claim 4, wherein the determining, based on uplink signal quality of the plurality of antenna switch channel sounding reference signals, a first antenna comprises:

measuring a reference signal received power of each antenna switch channel sounding reference signal, wherein when the reference signal received power indicates the uplink signal quality, a larger reference signal received power indicates better uplink signal quality; and

determining, as the first antenna, an antenna corresponding to an antenna switch channel sounding reference signal with a largest reference signal received power.

6. The method according to claim 4, wherein the determining, based on uplink signal quality of the plurality of antenna switch channel sounding reference signals, a first antenna comprises:

measuring a signal to interference plus noise ratio of each antenna switch channel sounding reference signal, wherein when the signal to interference plus noise ratio indicates the uplink signal quality, a larger signal to interference plus noise ratio indicates better uplink signal quality; and

determining, as the first antenna, an antenna corresponding to an antenna switch channel sounding reference signal with a largest signal to interference plus noise ratio.

7. The method according to any one of claims 4 to 6, wherein the antenna selection message comprises one of a radio resource control message, a downlink control information message, or a physical layer control element message.

8. An antenna selection apparatus, applied to an electronic device, wherein the electronic device comprises a plurality of antennas, and the apparatus comprises:

a sending module, configured to send an antenna switch channel sounding reference signal to a network device through each antenna;

a receiving module, configured to receive an antenna selection message sent by the network device, wherein the antenna selection message indicates a first antenna in the plurality of antennas and a signal quality gain of each remaining antenna relative to the first antenna;

an obtaining module, configured to obtain a preset signal quality correction gain of the first antenna; and

a determining module, configured to: when the signal quality gain of each remaining antenna is greater than the signal quality correction gain of the first antenna, determine to use the first antenna to perform communication.

9. An antenna selection apparatus, applied to a network device, wherein the apparatus comprises:

a receiving module, configured to receive a plurality of antenna switch channel sounding reference signals from an electronic device;

a determining module, configured to determine, based on uplink signal quality of the plurality of antenna switch channel sounding reference signals, a first antenna and a signal quality gain of each remaining antenna relative to the first antenna, wherein the first antenna is an antenna indicated by an antenna identifier corresponding to an antenna switch channel sounding reference signal with best uplink signal quality; and a sending module, configured to send an antenna selection message to the electronic device, wherein the antenna selection message indicates the first antenna in a plurality of antennas and the signal quality gain of each remaining antenna relative to the first antenna.

10. An electronic device, comprising a plurality of antennas, a memory, a processor, and a computer program that is stored in the memory and that canbe run on the processor, wherein when the processor executes the computer program, the method according to any one of claims 1 to 3 is implemented by using the plurality of antennas.

11. A network device, comprising a memory, a processor, and a computer program that is stored in the memory and that can be run on the processor, wherein when the processor executes the computer program, the method according to any one of claims 4 to 7 is implemented by using a plurality of antennas.

12. A computer-readable storage medium, wherein the computer-readable storage medium stores a computer program, and when the computer program is executed by a processor, the method according to any one of claims 1 to 3 is implemented.

13. A computer-readable storage medium, wherein the computer-readable storage medium stores a computer program, and when the computer program is executed by a processor, the method according to any one of claims 4 to 7 is implemented.

FIG. 1

FIG. 2

FIG. 3

System application

Desktop | Control bar | Settings | Phone | ...

Extended application/Third-party application

Application layer

Framework layer

Basic system capability subsystem set

User interface framework
Ability framework
User program framework
Multi-mode input subsystem
Graphic subsystem
Security subsystem
Artificial intelligence subsystem

Basic software service subsystem set

Event notification subsystem
Phone subsystem
Multimedia subsystem
Design for X subsystem
Mobile sensing platform and device virtualization subsystem
...

Enhanced software service subsystem set

Dedicated Vision service subsystem
Dedicated wearable service subsystem
Dedicated IoT service subsystem
...

Hardware service subsystem set

Position service subsystem
Biometric feature recognition subsystem
Dedicated wearable hardware service subsystem
Dedicated IoT hardware service subsystem
...

System service layer

Distributed task scheduling
Distributed data management
Distributed soft bus
Ark multi-language runtime subsystem
Utils subsystem

Kernel layer

- - - Kernel abstraction layer - - -

Kernel subsystem

Linux Kernel | LiteOS | ...

Driver subsystem

Hardware driver foundation

EP 4 270 810 A1

FIG. 4

Electronic device

| L3 | L2 | L1 |

Network device

| L1 | L2 | L3 |

Report an antenna selection capability of the electronic device and configure a resource configuration for sending an AS SRS by the electronic device — S301

Sequentially send an AS SRS signal on different time-frequency resources through each antenna — S303

Measure uplink signal quality of each AS SRS based on the configured AS SRS resource — S304

Obtain the configured AS SRS resource of the electronic device — S302

Send a measurement result of the uplink signal quality of each AS SRS — S305

Determine a first antenna and gains of remaining antennas relative to the first antenna — S306

Report identification information of the first antenna and the gains of remaining antennas relative to the first antenna — S307

TO
FIG. 5B

TO
FIG. 5B

TO
FIG. 5B

FIG. 5A

CONT.
FROM
FIG. 5A

CONT.
FROM
FIG. 5A

CONT.
FROM
FIG. 5A

S308

Send the identification information
of the first antenna and the gains of
remaining antennas relative to the
first antenna

S309

Obtain a signal
quality correction
gain of the first
antenna based on
the identification
information

S310

A
signal
quality gain
of each antenna is
greater than the
signal quality
correction
gain

Yes

S311

Switch to the
first antenna for
communication

No

S312

Determine a
second
antenna
through TAS

S313

Switch to the
second antenna
for
communication

FIG. 5B

| Electronic device | | | Network device | | |
|---|---|---|---|---|---|
| L3 | L2 | L1 | L1 | L2 | L3 |

S401 — Report an antenna selection capability of the electronic device and configure a resource configuration for sending an AS SRS by the electronic device

S403 — Sequentially send an AS SRS signal on different time-frequency resources through each antenna

S404 — Measure uplink signal quality of each AS SRS based on the configured AS SRS resource

S402 — Obtain the configured AS SRS resource of the electronic device

S405 — Send a measurement result of the uplink signal quality of each AS SRS

S406 — Determine a first antenna and gains of remaining antennas relative to the first antenna

S407 — Report identification information of the first antenna and the gains of remaining antennas relative to the first antenna

| TO FIG. 6B | TO FIG. 6B | TO FIG. 6B |
|---|---|---|

FIG. 6A

CONT.
FROM
FIG. 6A

CONT.
FROM
FIG. 6A

CONT.
FROM
FIG. 6A

S408

Send the
identification
information of the
first antenna and
the gains of
remaining
antennas relative
to the first antenna

S409

Obtain a signal
quality correction
gain of the first
antenna based on
the identification
information

S410

A
signal
quality gain
of each antenna is
greater than the
signal quality
correction
gain

Yes

S411

Switch to the
first antenna for
communication

No

S412

Determine a
second
antenna
through TAS

S413

Switch to the
second antenna
for
communication

FIG. 6B

| Electronic device | | | Network device | | |
|---|---|---|---|---|---|
| L3 | L2 | L1 | L1 | L2 | L3 |

Report an antenna selection capability of the electronic device and configure a resource configuration for sending an AS SRS by the electronic device — S501

Sequentially send an AS SRS signal on different time-frequency resources through each antenna — S503

Measure uplink signal quality of each AS SRS based on the configured AS SRS resource — S504

Obtain the configured AS SRS resource of the electronic device — S502

Send a measurement result of the uplink signal quality of each AS SRS — S505

Determine a first antenna and gains of remaining antennas relative to the first antenna — S506

Send identification information of the first antenna and the gains of remaining antennas relative to the first antenna — S507

TO FIG. 7B

TO FIG. 7B

TO FIG. 7B

FIG. 7A

CONT.
FROM
FIG. 7A

CONT.
FROM
FIG. 7A

CONT.
FROM
FIG. 7A

S508

Obtain a signal
quality correction
gain of the first
antenna based on
the identification
information

S509

A
signal
quality gain
of each antenna is
greater than the
signal quality
correction
gain

Yes

S510

Switch to the
first antenna for
communication

No

S511

Determine a
second
antenna
through TAS

S512

Switch to the
second antenna
for
communication

FIG. 7B

Sending module ⌇ 601

Receiving module ⌇ 602

Obtaining module ⌇ 603

Determining module ⌇ 604

FIG. 8

Receiving module ⌇ 701

Determining module ⌇ 702

Sending module ⌇ 703

FIG. 9

8

802

Memory

801 Processor

803 Computer program

Electronic device

FIG. 10

9

902

Memory

901 Processor

903 Computer program

Network device

FIG. 11

# INTERNATIONAL SEARCH REPORT

International application No.

**PCT/CN2021/140163**

## A. CLASSIFICATION OF SUBJECT MATTER

H04B 7/06(2006.01)i; H04L 5/00(2006.01)i

According to International Patent Classification (IPC) or to both national classification and IPC

## B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 其余, 其他, 其它, 第二, 第2, 剩余, 剩下, 第一, 第1, 天线, 探测参考信号, 最好, 最大, 最优, 最佳, 最强, 最高, 较好, 较大, 较优, 较佳, 较强, 较高, 作差, 之差, 的差, 差值, 减去, 相减, 减法, 增量, 增益, 切换, 选择, 重选, 质量, 强度, 功率, 信号干扰噪声比, 信噪比, 信号噪声比, 比吸收率, 电磁波吸收比, SRS, RSRP, RSRQ, SINR, RSSI, SNR, signal, channel, strength, intensity, power, quality, optimum, optimal, maximum, utmost, maximal, max, extremum, strongest, highest, antenna, switch, reselect, reelect, select, else, rest, other, residual, remanent, difference, subtract, increment, SAR

## C. DOCUMENTS CONSIDERED TO BE RELEVANT

| Category* | Citation of document, with indication, where appropriate, of the relevant passages | Relevant to claim No. |
|---|---|---|
| Y | WO 2019191970 A1 (HUAWEI TECHNOLOGIES CO., LTD.) 10 October 2019 (2019-10-10) <br> description, page 1 line 20 to page 16 line 33, page 22 line 2 to page 25 line 33 | 4-7, 9, 11, 13 |
| Y | CN 112290983 A (SHENZHEN QUECLINK COMMUNICATION TECHNOLOGY CO., LTD.) 29 January 2021 (2021-01-29) <br> description, paragraphs [0004]-[0049] | 4-7, 9, 11, 13 |
| A | CN 109067418 A (VIVO COMMUNICATION TECHNOLOGY CO., LTD.) 21 December 2018 (2018-12-21) <br> entire document | 1-13 |
| A | US 2015349870 A1 (APPLE INC.) 03 December 2015 (2015-12-03) <br> entire document | 1-13 |

☐ Further documents are listed in the continuation of Box C.    ☑ See patent family annex.

| | |
|---|---|
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **14 February 2022** | **07 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/140163**

| Patent document cited in search report | | | Publication date (day/month/year) | Patent family member(s) | | | Publication date (day/month/year) |
|---|---|---|---|---|---|---|---|
| WO | 2019191970 | A1 | 10 October 2019 | US | 2021021309 | A1 | 21 January 2021 |
| | | | | EP | 3764562 | A1 | 13 January 2021 |
| | | | | EP | 3764562 | A4 | 19 May 2021 |
| | | | | CN | 111937319 | A | 13 November 2020 |
| CN | 112290983 | A | 29 January 2021 | None | | | |
| CN | 109067418 | A | 21 December 2018 | CN | 109067418 | B | 17 December 2019 |
| US | 2015349870 | A1 | 03 December 2015 | US | 9231686 | B2 | 05 January 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110139652